# EUROPÄISCHE PATENTSCHRIFT

(11) **EP 2 522 457 B1**
(45) Veröffentlichungstag und Bekanntmachung des Hinweises auf die Patenterteilung: **31.07.2013**
(21) Anmeldenummer: 11165656.7
(22) Anmeldetag: 11.05.2011
(51) Int. Cl.: B23Q 1/01

(54) **Werkzeugmaschine mit einer Monoblockwand für Werkzeugspindel und Werkstückträger**
Machine tool with a monoblock wall for tool spindle and workpiece holder
Machine-outil dotée d'une paroi monobloc pour broche d'outil et support d'outil

(43) Veröffentlichungstag der Anmeldung: 14.11.2012
(73) Patentinhaber: Schwäbische Werkzeugmaschinen GmbH, 78713 Schramberg-Waldmössingen (DE)
(72) Erfinder: Armleder, Wolfgang, 78628 Rottweil (DE)
(74) Vertreter: Kohler Schmid Möbus

(56) Entgegenhaltungen:
- EP-A1- 2 255 921
- DE-C1- 19 639 527

## Beschreibung

Die Erfindung betrifft eine Werkzeugmaschine zur spanenden Bearbeitung von Werkstücken.

Aus der DE 196 39 527 C1 ist eine Werkzeugmaschine bekannt, bei der auf einem gemeinsamen Maschinenunterständer ein senkrechter rahmenartiger Werkzeugträger mit einem oberen waagerechten Querträger und parallel gegenüberliegend ein senkrechter rahmenartiger Werkstückträger mit einem oberen waagerechten Querträger angeordnet sind. Diese beiden etwa gleich hohen oberen Querträger sind über einen oder mehrere Verbindungsträger zu einer stabilen Einheit verbunden, so dass Verlagerungen zwischen Werkstückseite und Werkzeugseite, die sonst z.B. aufgrund hoher Beschleunigungs- und Bearbeitungskräfte in Z-Richtung auftreten können, über den bzw. die Verbindungsträger abgeleitet werden. Der Verbindungsträger ist gabelförmig ausgebildet und mit einem Schenkel am oberen Querträger des Werkstückträgers befestigt, während die Enden der beiden gabelförmigen Schenkel mit dem Querträger des Werkzeugträgers, auf diesem aufliegend, befestigt sind. Je nach den räumlichen Gegebenheiten und den Fertigungserfordernissen wird der Verbindungsträger mittig, außermittig oder auch an einem Ende des Querträgers befestigt. Als separat herzustellendes Spezialteil bedeutet dieser Verbindungsträger zusätzlichen Herstellungs- und Fertigungsaufwand.

Es ist demgegenüber die Aufgabe der Erfindung, eine einfachere, kostengünstigere Werkzeugmaschine bereitzustellen, bei der Verlagerungen zwischen Werkstückseite und Werkzeugseite auch ohne spezialangefertigte Teile wirkungsvoll verhindert werden können.

Diese Aufgabe wird erfindungsgemäß durch eine Werkzeugmaschine mit den Merkmalen von Anspruch 1 gelöst.

Erfindungsgemäß sind die horizontalen Führungen des Werkstückträgers zu beiden Seiten der Wandöffnung vorgesehen, also durch die Wandöffnung unterbrochen, wodurch die X-Achse zu beiden Seiten der Wandöffnung aufgetrennt ist. Die horizontalen X-Führungen sind also im Bereich des Späneanfalls bzw. für einen "freien Spänefall" unterbrochen. Horizontale X-Führungen unter dem schwenkbaren Werkstückträger sind insbesondere dann nicht erforderlich, solange der Hub der X-Achse deutlich kleiner als die Spannweite des schwenkbaren Werkstückträgers ist. Das ist vor allem bei mehrspindligen Anwendungen gegeben. Die beim Relativverfahren von Werkzeugspindel und Werkstück und insbesondere die beim Bearbeiten des Werkstücks mit dem in der Werkzeugspindel eingespannten Werkzeug in Z-Richtung wirkenden Kräfte werden in die vertikale Wand abgeleitet und dort aufgenommen. Die vertikale Wand kann einstückig als Monoblockwand (z.B. als Gussteil) ausgebildet oder aus mehreren miteinander verbundenen, insbesondere verschweißten Einzelteilen zusammengesetzt sein.

Besonders bevorzugt ist der Werkstückträger in einem Antriebslager und einem Gegenlager drehbar um eine horizontale Achse gelagert und mittels dieser Antriebs-und Gegenlager auch in X-Richtung verfahrbar geführt. Die beiden Lager und der dazwischen vorgesehene Werkstückträger bilden somit zusammen einen in X-Richtung verfahrbaren Schubverband.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: die erfindungsgemäße Werkzeugmaschine in perspektivischer Ansicht;
- Fig. 2: eine Frontansicht auf die in Fig. 1 gezeigte Werkzeugmaschine, jedoch ohne Y-Z-Schlitten;
- Fig. 3: eine Seitenansicht der in Fig. 1 gezeigten Werkzeugmaschine beim manuellen Be- und Entladen von Werkstücken (Fig. 3a), beim manuel-len Werkzeugwechsel (Fig. 3b) und beim Wechseln eines Werkstück-trägers mittels eines Krans (Fig. 3c); und
- Fig. 4: eine modifizierte erfindungsgemäße Werkzeugmaschine in perspektivi-scher Ansicht analog zu Fig. 1.

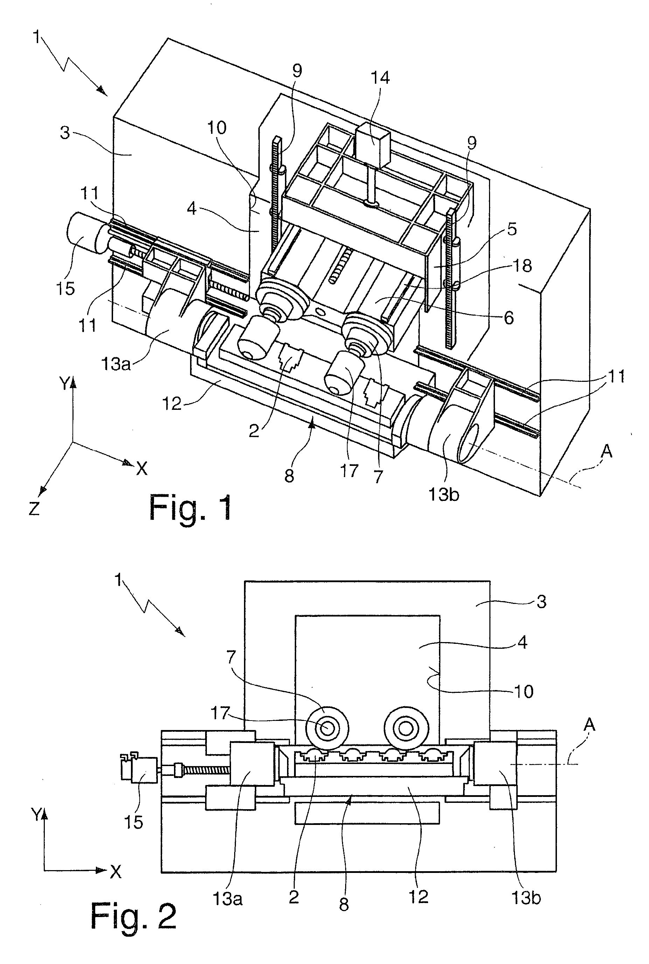

Die in **Fign. 1 und 2** gezeigte Werkzeugmaschine **1** zur spanenden Bearbeitung von Werkstücken **2** umfasst ein Maschinengestell in Form einer vertikalen Wand **3** mit einer Wandöffnung **4**, einen innerhalb der Wandöffnung **4** vertikal verfahrbaren Y-Schlitten **5**, der einen horizontal verfahrbaren Z-Schlitten **6** mit zwei parallel nebeneinander angeordneten horizontalen Werkzeugspindeln (Arbeitsspindeln) **7** trägt, und einen vor der Wandöffnung **4** angeordneten, horizontal in X-Richtung verfahrbaren Werkstückträger **8**, wobei der Y-Schlitten 5 und der Werkstückträger 8 an der vertikalen Wand 3 verfahrbar geführt sind. Die Wandöffnung 4 ist ringsum, also rahmenförmig, von der vertikalen Wand 3 umgeben und kann als beidseitig offene Durchgangsöffnung ausgebildet sein.

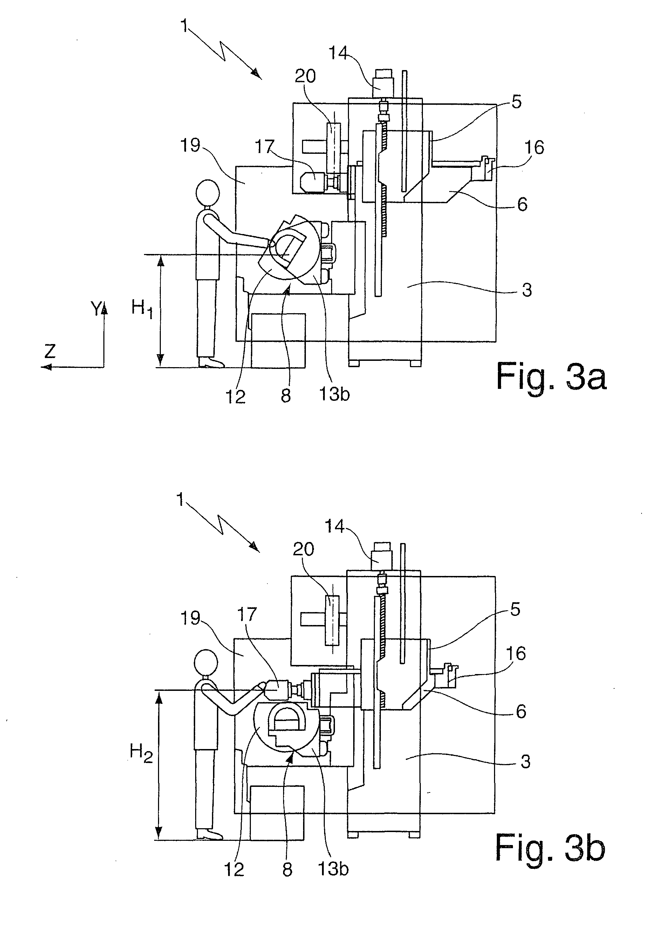

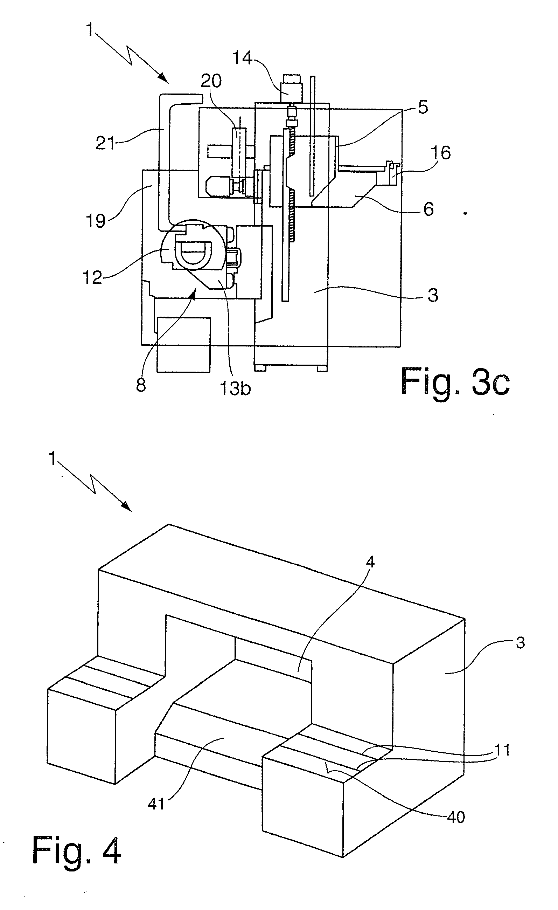

Der Y-Schlitten 5 ist in vertikalen Führungen **9** geführt, die an den vertikalen Laibungsflächen **10** der Wandöffnung 4 vorgesehen sind. Alternativ können die vertikalen Führungen 9 auch außen an der Vorder- oder Rückseite der vertikalen Wand 3 vorgesehen sein. Der Werkstückträger 8 ist in X-Richtung in horizontalen Führungen **11** verfahrbar geführt, die an der Vorderseite der vertikalen Wand 3 zu beiden Seiten der Wandöffnung 4 vorgesehen sind und durch die Wandöffnung 4 in linke und rechte Führungsabschnitte aufgeteilt ist. Der Werkstückträger 8 ist durch einen Schwenkbalken **12** gebildet, der drehbar um eine zu den horizontalen Führungen 11 parallele horizontale Achse **A** in einem Antriebslager **13a** und einem Gegenlager **13b** gelagert ist, welche wiederum in den horizontalen Führungen 11 in X-Richtung verfahrbar geführt sind. Genauer gesagt ist das Antriebslager 13a im linken und das Gegenlager 13b im rechten Führungsabschnitt geführt. Die beiden Lager 13a, 13b und der dazwischen vorgesehene Schwenkbalken 12 bilden somit zusammen einen Schubverband. Der Spindelmotor zum Verfahren des Y-Schlittens 5 ist mit **14**, der Spindelmotor zum Verfahren des Antriebslagers 13a mit **15** und der Spindelmotor zum Verfahren des Z-Schlittens 6 ist mit **16** (Fig. 3) bezeichnet. Weiterhin sind die an den Werkzeugspindeln 7 montierten Werkzeuge mit **17** und die am Y-Schlitten 5 vorgesehenen Z-Führungen mit **18** bezeichnet. Die horizontalen X-Führungen 11 sind also im Bereich des Späneanfalls bzw. für einen "freien Spänefall" unterbrochen. Horizontale X-Führungen unter dem schwenkbaren Werkstückträger 8 sind insbesondere dann nicht erforderlich, solange der Hub der X-Achse deutlich kleiner als die Spannweite des schwenkbaren Werkstückträgers 8 ist. Das ist vor allem bei mehrspindligen Anwendungen gegeben.

Die vertikale Wand 3 kann, wie in Fig. 1 gezeigt, einstückig als Monoblockwand ausgebildet oder aus mehreren miteinander verbundenen, insbesondere verschweißten Einzelteilen zusammengesetzt sein. Die vertikale Wand 3 bildet einen in sich geschlossenen Rahmen mit der Wandöffnung 4 als Rahmenöffnung. Die beim Relativverfahren von Werkzeugspindel 7 und Werkstück 2 und insbesondere die beim Bearbeiten des Werkstücks 2 mit dem in der Werkzeugspindel 7 eingespannten Werkzeug 17 in Z-Richtung wirkenden Kräfte werden in die vertikale Wand 3 abgeleitet und dort aufgenommen.

Zum Be- und Entladen von Werkstücken 2 durch den Bediener wird, wie in **Fig. 3a** gezeigt, eine Vordertür einer den Werkstückträger 8 nach vorne und nach oben abdeckenden Abdeckung **19** geöffnet. Der Werkstückträger 8 ist auf einer Werkstückbeladehöhe **H₁** von etwa 1000 mm abgeordnet, um das manuelle Be- und Entladen der Werkstücke 2 zu erleichtern. Die Werkstücke 2 werden dann bei geschlossener Abdeckung 19 mit dem Werkzeug 17 bearbeitet, wobei die Späne frei fallen.

Zum Werkzeugwechsel durch den Bediener wird, wie in **Fig. 3b** gezeigt, die Vordertür der Abdeckung 19 geöffnet, und das Werkzeug 17 wird über die Werkzeugspindel 7 aus einem frontseitigen Wergzeugmagazin 20 be- und entladen, das oberhalb der Wandöffnung 4 an der vertikalen Wand 3 vorgesehen ist. Das Werkzeugmagazin 20 wird somit kostengünstig über die Werkzeugspindel 7 mit Werkzeugen 17 bestückt, und zwar vorteilhaft auf einer Werkzeugbeladehöhe **H₂** von etwa 1400 mm.

Das Wechseln des Werkstückträgers 8 kann, wie in **Fig. 3c** gezeigt, mittels eines Krans **21** über ein geöffnetes Dach der Abdeckung 19 erfolgen.

Von der in Fign. 1 bis 3 gezeigten Werkzeugmaschine unterscheidet sich die in **Fig. 4** gezeigte Werkzeugmaschine 1 lediglich dadurch, dass hier die durch die Wandöffnung 4 unterbrochenen horizontalen Führungen 11 auf einem horizontalen Absatz **40** der vertikalen Wand 3 angeordnet sind.

Die gezeigten Werkzeugmaschinen 1 können anstatt mit den gezeigten zwei Werkzeugspindeln 7 auch mit noch weiteren Werkzeugspindeln oder auch nur mit einer einzigen Werkzeugspindel ausgestattet sein. Die vertikale Wand 3 unterhalb der Wandöffnung 4 bzw. der Absatz 40 können für einen "freien Spänefall" nach innen, also in Z-Richtung der Werkzeugspindel 7, zurückgesetzt sein und eine nach vorne schräg abfallende Schräge **41** zum Abführen der Späne der aufweisen.

## Patentansprüche

1. Werkzeugmaschine (1) zur spanenden Bearbeitung von Werkstücken (2), umfassend:
eine vertikale Wand (3) mit einer Wandöffnung (4),
einen innerhalb der Wandöffnung (4) vertikal verfahrbaren Y-Schlitten (5), der an der vertikalen Wand (3) verfahrbar geführt ist und einen horizontal verfahrbaren Z-Schlitten (6) mit mindestens einer horizontalen Werkzeugspindel (7) trägt, **dadurch gekennzeichnet, dass** sie
einen vor der Wandöffnung (4) angeordneten, horizontal in X-Richtung verfahrbaren Werkstückträger (8) aufweist, dessen horizontale Führungen (11) außen an der vertikalen Wand (3) oder auf einem insbesondere horizontalen Absatz (40) der vertikalen Wand (3) vorgesehen und durch die Wandöffnung (4) unterbrochen sind.

2. Werkzeugmaschine nach Anspruch 1, **dadurch gekennzeichnet, dass** die vertikale Wand (3) einstückig ausgebildet ist und insbesondere ein Gussteil ist.

3. Werkzeugmaschine nach Anspruch 1, **dadurch gekennzeichnet, dass** die vertikale Wand (3) aus mehreren miteinander verbundenen, insbesondere verschweißten Einzelteilen gebildet ist.

4. Werkzeugmaschine nach einem der vorhergehenden Ansprüche, **dadurch gekennzeichnet, dass** vertikale Führungen (9) des Y-Schlittens (5) außen an der vertikalen Wand (3) oder an den Laibungsflächen (10) der Wandöffnung (4) vorgesehen sind.

5. Werkzeugmaschine nach einem der vorhergehenden Ansprüche, **dadurch gekennzeichnet, dass** der Werkstückträger (8) in einem Antriebslager (13a) und einem Gegenlager (13b) drehbar um eine horizontale Achse (A) gelagert und mittels der Antrieb- und Gegenlager (13a, 13b) in X-Richtung verfahrbar geführt ist.

6. Werkzeugmaschine nach einem der vorhergehenden Ansprüche, **dadurch gekennzeichnet, dass** der Werkstückträger (8) nach vorne und nach oben durch eine front- und/oder dachseitig öffnenbare Abdeckung (19) abgedeckt ist.

7. Werkzeugmaschine nach einem der vorhergehenden Ansprüche, **dadurch gekennzeichnet, dass** an der vertikalen Wand (3), insbesondere oberhalb der Wandöffnung (4), ein Werkzeugmagazin (20) vorgesehen ist.

8. Werkzeugmaschine nach einem der vorhergehenden Ansprüche, **dadurch gekennzeichnet, dass** die vertikale Wand (3) unterhalb der Wandöffnung (4) zurückgesetzt ist.

9. Werkzeugmaschine nach einem der vorhergehenden Ansprüche, **dadurch gekennzeichnet, dass** die vertikale Wand (3) oder der horizontalen Absatz (40) unterhalb der Wandöffnung (4) eine nach vorne schräg abfallende Schräge (41) aufweist.

## Claims

1. Machine tool (1) for machining workpieces (2), comprising:
a vertical wall (3) with a wall opening (4),
a Y carriage (5), which can be vertically moved within the wall opening (4), is guided in such a manner that it can be moved along the vertical wall (3), and
carries a Z carriage (6), which can be horizontally moved and comprises at least one horizontal tool spindle (7),
**characterized in that** it comprises a workpiece carrier (8), which is disposed in front of the wall opening (4) and can be horizontally moved in X direction, the horizontal guidances (11) of which are provided at the outside of the vertical wall (3) or on a shoulder (40), in particular a horizontal shoulder, of the vertical wall (3), and are interrupted by the wall opening (4).

2. Machine tool according to claim 1, **characterized in that** the vertical wall (3) is formed in one piece and is, in particular, a cast piece.

3. Machine tool according to claim 1, **characterized in that** the vertical wall (3) is formed from several interconnected, in particular, welded individual parts.

4. Machine tool according to any one of the preceding claims, **characterized in that** the vertical guidances (9) of the Y carriage (5) are provided at the outside of the vertical wall (3) or on the embrasure surfaces (10) of the wall opening (4).

5. Machine tool according to any one of the preceding claims, **characterized in that** the workpiece carrier (8) is supported in a drive bearing (13a) and a counter bearing (13b) in such a manner that it can be rotated about a horizontal axis (A) and is guided in such a manner that it can be moved in X direction by means of the drive and counter bearings (13a, 13b).

6. Machine tool according to any one of the preceding claims, **characterized in that** the workpiece carrier (8) is covered to the front and to the top by means of a cover (19) that can be opened at the front and/or at the top.

7. Machine tool according to any one of the preceding claims, **characterized in that** a tool magazine (20) is provided on the vertical wall (3), in particular, above the wall opening (4).

8. Machine tool according to any one of the preceding claims, **characterized in that** the vertical wall (3) is recessed below the wall opening (4).

9. Machine tool according to any one of the preceding claims, **characterized in that** below the wall opening (4), the vertical wall (3) or the horizontal shoulder (40) has an inclined surface (41) sloping downward to the front.

## Revendications

1. Machine-outil (1) dévolue à l'usinage de pièces (2) par enlèvement de copeaux, comprenant :
une paroi verticale (3) munie d'un orifice (4),
un chariot des Y (5) déplaçable verticalement à l'intérieur dudit orifice (4) de la paroi, et guidé avec mobilité sur ladite paroi verticale (3), et un chariot des Z (6) déplaçable horizontalement et pourvu d'au moins une broche horizontale (7) porte-outils, **caractérisée par le fait**
**qu'**elle présente un porte-pièces (8) disposé devant l'orifice (4) de la paroi, déplaçable horizontalement dans la direction des X et dont les guides horizontaux (11) sont prévus extérieurement sur la paroi verticale (3) ou sur un gradin (40) de ladite paroi verticale (3), notamment horizontal, et sont interrompus par ledit orifice (4) de ladite paroi.

2. Machine-outil selon la revendication 1, **caractérisée par le fait que** la paroi verticale (3) est de réalisation monobloc et se présente, en particulier, comme une pièce produite par coulée.

3. Machine-outil selon la revendication 1, **caractérisée par le fait que** la paroi verticale (3) est formée de plusieurs parties individuelles reliées les unes aux autres, notamment par soudage.

4. Machine-outil selon l'une des revendications précédentes, **caractérisée par le fait que** des guides verticaux (9) du chariot des Y (5) sont prévus extérieurement sur la paroi verticale (3), ou sur les surfaces d'embrasure (10) de l'orifice (4) de ladite paroi.

5. Machine-outil selon l'une des revendications précédentes, **caractérisée par le fait que** le porte-pièces (8) est monté à rotation autour d'un axe horizontal (A), dans un palier d'entraînement (13a) et dans un contre-palier (13b), et est guidé avec mobilité dans la direction des X, au moyen desdits palier d'entraînement et contre-palier (13a, 13b).

6. Machine-outil selon l'une des revendications précédentes, **caractérisée par le fait que** le porte-pièces (8) est recouvert, vers l'avant et vers le haut, par un capot (19) pouvant être ouvert frontalement et/ou par le sommet.

7. Machine-outil selon l'une des revendications précédentes, **caractérisée par le fait qu'**un magasin d'outillage (20) est prévu sur la paroi verticale (3), en particulier au-dessus de l'orifice (4) de ladite paroi.

8. Machine-outil selon l'une des revendications précédentes, **caractérisée par le fait que** la paroi verticale (3) est en retrait au-dessous de l'orifice (4) de ladite paroi.

9. Machine-outil selon l'une des revendications précédentes, **caractérisée par le fait que** la paroi verticale (3) ou le gradin horizontal (40) comporte, au-dessous de l'orifice (4) de ladite paroi, un biseau (41) déclinant à l'oblique vers l'avant.
